(19) Europäisches Patentamt
European Patent Office
Office européen des brevets

(11) **EP 4 114 614 B1**

(12) **EUROPEAN PATENT SPECIFICATION**

(45) Date of publication and mention
of the grant of the patent:
**27.08.2025 Bulletin 2025/35**

(51) International Patent Classification (IPC):
*A44C 17/00* (2006.01)    *A44C 17/02* (2006.01)
*B24B 9/16* (2006.01)    *B24B 27/00* (2006.01)
*B24B 35/00* (2006.01)    *B24B 49/00* (2012.01)
*B24B 49/12* (2006.01)    *B24B 49/14* (2006.01)
*B24B 51/00* (2006.01)    *B25J 11/00* (2006.01)
*B24B 49/04* (2006.01)

(21) Application number: **21766889.6**

(22) Date of filing: **11.03.2021**

(52) Cooperative Patent Classification (CPC):
**B24B 49/12; A44C 17/001; A44C 17/02;
B24B 9/167; B24B 27/0069; B24B 35/005;
B24B 49/003; B24B 49/04; B24B 49/14;
B24B 51/00; B25J 11/0065**

(86) International application number:
**PCT/IL2021/050272**

(87) International publication number:
**WO 2021/181397 (16.09.2021 Gazette 2021/37)**

(54) **METHODS FOR FACETING OF AN OBJECT**

VERFAHREN ZUM FACETIEREN EINES OBJEKTS

PROCÉDÉS DE FACETTAGE D'UN OBJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2020 US 202062987875 P**

(43) Date of publication of application:
**11.01.2023 Bulletin 2023/02**

(73) Proprietor: **Zalirian Ltd.**
**52522159 Ramat-Gan (IL)**

(72) Inventors:
• **BEN SHMUEL, Oded**
**4906419 Petach-Tikva (IL)**
• **STOPER, Shilo**
**4439254 Kfar Saba (IL)**
• **SPIRMAN, Omri**
**4050003 Even Yehuda (IL)**

(74) Representative: **Prüfer & Partner mbB
Patentanwälte · Rechtsanwälte
Sohnckestraße 12
81479 München (DE)**

(56) References cited:
WO-A1-2019/042850    WO-A1-2019/043488
WO-A1-2019/043488    WO-A1-2020/183440
JP-A- 2020 163 478    US-A1- 2014 067 331
US-A1- 2014 235 141    US-B2- 10 131 033
US-B2- 10 173 916

**Description**

FIELD AND BACKGROUND OF THE INVENTION

The present invention relates to methods for faceting of an object according to the preamble of claims 1 and 7 respectively (see for example WO 2019/042850 A1), and more particularly to method for faceting diamonds.

Traditionally, faceting objects such diamonds and other gems have been performed manually with a polishing wheel, e.g. a scaif. This manual process is known to be time consuming and expensive. Computer methods are known for assisting in planning the polishing of a rough gem. Often a three-dimensional (3D) model of the rough gem is generated and a target polished gem may be defined within the three-dimensional model. However, after the plan is in place, the subsequent polishing process, by which each facet of the gem is cut and polished, is typically performed manually so that the process may be monitored and adjustments may be made as needed.

The faceting process may introduce artifacts on a surface of the gem such as pits, scratches and polishing lines. In addition, natural artifacts within the gem may surface during the polishing process. Human intervention is typically required to adapt the faceting process to overcome these obstacles. Inaccuracies in the polishing process itself may also require human intervention. High temperatures may arise due to the friction between the gem and the polishing wheel and may affect precision of the polishing. When polishing a diamond, certain polishing directions may be more resistant to polishing as compared to others due to the crystal structure of the diamond. Polishing in an unfavorable polishing direction hinders the ability to polish and may affect the polish finish. Repetitive monitoring and adjusting is required to obtain a high quality final product. For an automated process to replace the traditional manual polishing method, high precision faceting with the ability to adapt the faceting process over the course of the process would be required.

International Patent Application Publication No. WO/2019/042850 entitled "Improved methods for controlling the polishing of gemstones," the contents of which is incorporated herein by reference discloses a method for controlling the polishing of a gemstone. The method includes obtaining a three-dimensional model of the gemstone; fixing the gemstone in a dop, wherein an initial facet to be polished is aligned; obtaining at least one image of the initial facet while the gemstone is in the tang such that a contour of the initial facet can be determined from the at least one image. Based on the obtained at least one image and the obtained three-dimensional model, at least first setting parameters for a first planned facet positioned between the initial facet and a desired final polished facet is determined. The dop for obtaining a polished gemstone having a polished facet approaching the first planned facet is set. At least one image of the polished while the gemstone is in the tang is obtained. Based on the obtained at least one image of the polished facet and the three-dimensional model, determining at least further setting parameters for a further planned facet. Setting the dop for obtaining a polished gemstone having a polished facet approaching the further planned facet.

International Patent Application Publication No. WO/2019/043488 entitled "An automatic gemstone polishing robot," the contents of which is incorporated herein by reference describes a fully automatic gemstone polishing robot. The automatic gemstone polishing robot includes a gemstone polishing unit, an image capturing unit and an image processing unit. The imaging processing unit is executed by one or more processors and analyzes images of the gemstone with respect to one or a plurality of gemstone parameters. The image processing unit compares the one or a plurality of analyzed gemstone parameters with one or a plurality of predetermined gemstone parameters to generate the feedback signal to be transmitted to the gemstone polishing unit. The gemstone polishing unit includes a gemstone holding unit for supporting a gemstone in contact with an abrasive surface and polishes the gemstone in a plurality of iterations based on a feedback signal.

Further, US 2014/235141 A1 relates to a method and an apparatus for automation of robotic surface finishing of a three-dimensional surface of a work piece. A three-dimensional motion path is created along the surface of the work piece. A variable contact force profile is specified along the three-dimensional motion path. The three-dimensional motion path is modified based on the specified variable contact force profile. The surface of the work piece is finished using one or more surface finishing tools along the modified three-dimensional motion path.

US 2014/067331 A1 relates to a system for controlling the cut of a gemstone including a gemstone scanner adapted to scan a plurality of facets of an actual gemstone so as to determine facet parameters pertaining to each one of the plurality of facets. The system also includes a control module operatively coupled to the gem scanner and adapted to receive the determined facet parameters of the plurality of facets of the gemstone. The control module generates an actual 3D model of the actual gemstone from determined facet parameters and an idealized 3D model for an idealized gemstone. The control module compares the actual 3D model with the idealized 3D model to determine leakage values for facet parameters of each one of the facets of the gemstone such that the leakage value is used to control the cut of the gemstone.

SUMMARY OF THE INVENTION

According to a first aspect of the present invention, a method for faceting of an object is defined in claim 1.

According to a second aspect of the present invention a method for faceting of an object is defined in claim 7.

Further preferred embodiments according to the first and second aspects of the present invention are defined in the dependent claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE SEVERAL VIEWS OF THE DRAWING(S)

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a simplified schematic drawing of an automated faceting apparatus;

FIG. 2 is a simplified schematic drawing of an example imaging system for the automated faceting apparatus;

FIG. 3 is a simplified flow chart of an example method to generate a 3D model of an object for faceting;

FIGS. 4A, 4B and 4C are simplified drawings depicting three example sets of instructions for forming a same plurality of facets on an object;

FIG. 5 is a simplified flow chart of a method to generate an ordered list for forming facets on an object whose chemical structure is a crystal lattice;

FIG. 6 is a simplified flow chart of an example method to select an orientation of a facet on a polishing wheel during polishing;

FIGS. 7A and 7B are example graphs showing output from sensors sensing a polish related parameter while an object is rotated about an axis perpendicular to a polishing wheel during polishing;

FIGS. 8A and 8B are simplified drawings showing example crystallographic axes in relation to a facet of an object;

FIG. 9 is a simplified flow chart of an example method to predict crystallographic axes of the object;

FIG. 10 is a simplified flow chart of an example method to adjust a polishing on-the-fly with the automated polishing apparatus;

FIG. 11 is a simplified flow chart of an example method to adjust the polishing based on image data captured with the automated polishing apparatus;

FIG. 12 is a simplified schematic drawing of a modeled geometry for an example modeled facet and two example discrepancies in facet geometry that may occur during faceting;

FIG. 13 is a simplified flow chart of an example method to detect and record parameters of the object at the end of the faceting process;

FIG. 14A is a simplified schematic drawing of an example automated faceting apparatus including both a laser cutting station and a polishing station;

FIG. 14B is a simplified schematic drawing of a laser cutting station;

FIG. 15 is a simplified flow chart of an example method to combine laser cutting and polishing to facet an object;

FIG. 16 is an example press-pot for holding an object; and

FIG. 17 is a simplified flow chart of an example method to identify object with press-pot identification code.

DESCRIPTION OF SPECIFIC EMBODIMENTS OF THE INVENTION

The present invention, in some embodiments thereof, relates to automated apparatuses and methods for polishing multi-faceted objects and, more particularly, but not exclusively, to an automated apparatus and method for polishing diamonds.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The apparatus and method provides an automated method for detecting favorable polishing directions. A favorable polishing direction for a facet may be detected based on sensing one or more polishing related parameter over different orientations of the facet on the polishing wheel. Optionally and preferably, the polishing related parameter provide indication of a rate of material removed and the favorable polishing direction is a direction with a relative high rate and/or a peak rate of material removed.

The apparatus and method provides adjusting operational parameters on-the-fly during polishing with closed loop control.

The closed loop control is configured to maintain a steady, controlled and/or constant rate of material removed on a facet as the depth of polishing and surface area of the facet increases. Optionally, rotation speed of said polishing wheel, contact pressure of object against polishing wheel and/or track position of the object on the rotating wheel is controlled on-the-fly.

In some configurations, the object's chemical structure is a crystal lattice and the apparatus and method is configured to predict the crystallographic axes of the crystal based on a trial-and-error process performed on one or more facets of the object. In some example embodiments, the crystallographic axes are extrapolated based on at least four favorable polishing directions sensed through a trial-and-error process. In some configurations, one of the orthogonal projections of the crystallographic axes on a facet is selected as a favorable polishing direction for that facet.

The apparatus includes both laser cutting and polishing capability and a controller configured to operate the robotic arm to position the object with respect to said laser cutting device for removal of a first portion of the object by laser cutting, and subsequently to operate said robotic arm to position the object with respect to said polishing wheel for removal of a second portion of the object by polishing without disengaging the object from said robotic arm. Optionally, integrating laser cutting into the faceting process may significantly reduce the processing time required for faceting.

The apparatus and method is configured to maintain an authentication trail identifying the object throughout the faceting process based on a series of images captured over the faceting process. The authentication trail preferably comprises sufficient information to identify the raw, pre-polished object, both during the polishing process, and after the polishing process is completed. The authentication trail can be in the form of, for example, a library of descriptors that is associated with the object, once polished, and that describes the polishing process, optionally and preferably by its entirety. The descriptors may be in the form of digital images and/or computer rendered shapes and/or computer rendered coordinates. The library includes a set of descriptors for each facet formed by the apparatus, wherein each set of descriptors is time-ordered and describes the evolution of the shape of the respective facet during its formation by the apparatus.

A press-pot holding the object includes an identity (ID) code and a controller is configured to access instructions on a computer readable medium for polishing the object based on identifying the identity code on the press-pot.

The apparatus and method is configured to compute an ordered list based on which the object is faceted. In some example embodiments, the ordered list is defined to reduce the processing time required for faceting. Optionally, the processing time may be reduced based on reducing joint movement of the robotic arm over the faceting process. Optionally, a plurality of parameters are considered when determining the order for polishing. Non-limiting examples of these parameters include volume of material to be removed, crystallographic orientation relative to the facet to be polished and location of artifacts detected in or on the surface of the object.

The apparatus and method is configured to generate a signature key for a polished object based on a geometry of each of its facets, a 3D position of each of its facets and a morphology of the facets. Unlike the authentication trail that links the raw object to the polished object by recording steps of the polishing process, and therefore authenticates that the polished object originates from the raw object, the signature key describes only the shape and morphology of the polished object. In some embodiments of the present invention the signature key also includes a grade (e.g., a cut grade, polish grade, symmetry grade) of the object. Optionally, a grade of the object is separately generated.

The apparatus includes an inspection station with an imaging system and an image processor. In some configurations, the imaging system comprises a telecentric imaging system and a microscope imaging system, and the image processor comprises a circuit configured to process the captured images from both the telecentric imaging system and a microscope imaging system, generate a 3D model of the object and optionally and preferably also inspect facets of the object over the course of the automated faceting process. In some configurations, the 3D model is generated with the telecentric imaging system based on shadow modeling and optionally refined based on selected images captured with microscope imaging system. Optionally and preferably, the image processor is also configured to classify artifacts detected on a surface of a facet(s). Optionally and preferably, the 3D model is generated while the object is mounted on the robotic arm so that the generated model is defined with the coordinate system of the apparatus. When a 3D model of the object and/or a target model of the object defining the faceting plan is received together with the object, registration is performed between the 3D model generated and the model(s) received. Optionally and preferably, registration is performed at the imaging station at the onset of the automated process.

During the automated faceting process, the robotic arm is configured to move the object to the inspection station between polishing iterations for inspecting a formed facet and optionally and preferably updating the generated 3D model of the object. At the end of the automated faceting process, the robotic arm moves the object to the inspection station again for a final inspection of the object. In some example embodiments, the final inspection includes defining a grade (e.g., a cut grade, a polish grade, a symmetry grade) of the object based on image data captured with the imaging system. In some example embodiments, the final inspection includes generating the signature key based on image data captured with the imaging system. Optionally and preferably, but not necessarily, the signature key uniquely identifies the object.

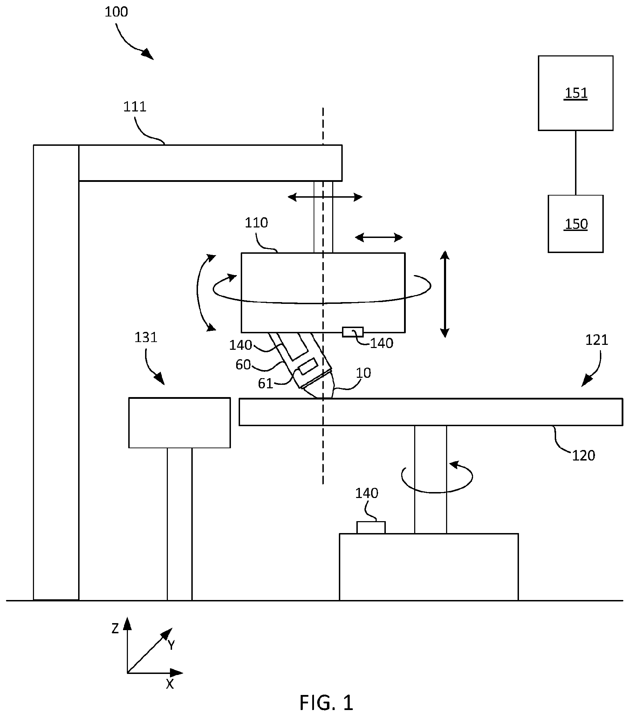

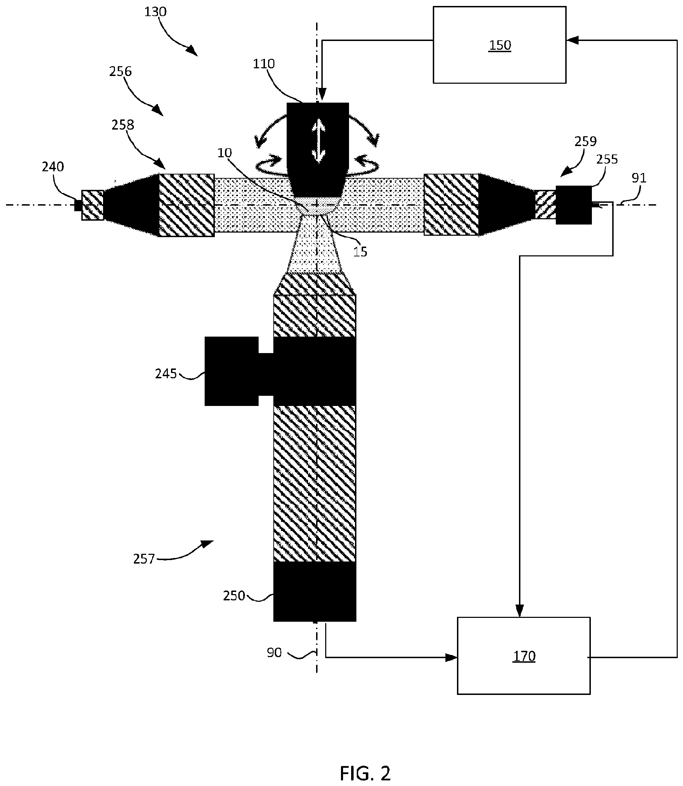

FIG. 1 is a simplified schematic drawing of an automated faceting apparatus 100. Automated faceting apparatus 100 comprises a robotic arm 110 configured to hold an object 10 during faceting, and a polishing station 121 including polishing wheel 120 for polishing object 10. Optionally, apparatus 100 comprises an imaging station 131 including an imaging system with image processing capability for inspecting object 10. An example imaging system is shown in FIG. 2. In some configurations, apparatus 100 comprises one or more sensors 140 for sensing polishing related parameters. A controller 150 is optionally and preferably configured for controlling arm 110 to move object 10 between polishing station 121 and imaging station 131, and optionally and preferably also for controlling operation of apparatus 100 based on output from sensors 140 acquired while polishing and/or based on image data acquired at imaging station 131. Controller 150 may be configured to coordinate operation of robotic arm 110 with each of polishing station 121 and imaging station 131 as well as sensors 140. Controller 150 is preferably a computerized controller and may include processing and memory capability and may also communicate with a computing device 151 including processing capability, memory and user interface capability. In some configurations, controller 150 comprises a dedicated electronic circuit configured for executing one or more of the operations described herein.

Robotic arm 110 may provide movement with multiple degrees of freedom, e.g. 4-6 degrees of freedom. In some example embodiments, robotic arm 110 is configured for both gross movement capability and fine movement capability in one or more directions. Gross movement capability is useful for moving object 10, for example, between polishing station 121 and imaging station 131. Fine movement capability is useful, for example, for orienting object during polishing and inspection with high resolution, e.g., sub-micrometer resolution (for example, resolution of 0.01-0.9 $\mu$m) for linear movements and milli-degree resolution (for example, resolution of $0.01 \cdot 10^{-3}$-$0.9 \cdot 10^{-3}$ degrees) for rotational movements. Optionally and preferably, robotic arm 110 is mounted on a rail 111 and is actuated to shift between polishing station 121 and imaging station 131 along rail 111. Object 10 is optionally and preferably mounted on robotic arm 110 with a press-pot 60. In some example embodiments, press-pot 60 is marked with an identification (ID) code 61 to identify object 10. Representative examples of ID code suitable for exemplary embodiments of the present invention are provided below.

Sensors 140 may be mounted on robotic arm 110, and/or on press-pot 60, and/or polishing wheel 120. One or more of sensors 140 may sense remotely, instead of being mounted on any of robotic arm 110, press-pot 60, and polishing wheel 120. Sensors 140 may include for example one or more vibration sensors, e.g. accelerometer, microphone, temperature sensors, and displacement sensors. Displacement may be sensed with an encoder, e.g. a displacement encoder configured to sense the height of object 10 along the Z axis during polishing. Optionally, displacement is also sensed in the X direction and/or Y direction with dedicated encoders. In some example embodiments, sensors 140 include one or more sensors configured to sense electrical current supplied to robotic arm 110 and/or polishing wheel 120. The electrical current is indicative of friction generated between object 10 and polishing wheel 120 during polishing and also of the pressure applied against polishing wheel 120 with object 10 during polishing. In some embodiments of the present invention controller 150 is configured to analyze the electrical current and obtain the friction and/or pressure. Optionally, sensors 140 include one or more image sensors configured to capture images during polishing.

Robotic arm 110 positions and aligns object 10 in imaging station 131 prior to the polishing process to generate a 3D model of object 10. The 3D model of object 10 is detected while object 10 is mounted on robotic arm 110. Instructions for faceting object 10 may then be defined based on the coordinate system of apparatus 100. Optionally, the instructions may be based on a target model received in association with the object, based on general guidelines related to a desired size and shape for faceting, and/or may be self-generated at imaging station 131. During the polishing process, robotic arm 110 is optionally and preferably configured to repeatedly toggle object 10 between polishing station 121 for polishing and imaging station 131 for inspection. Optionally, the 3D model defined may be updated per inspection or per a plurality of inspections. Optionally and preferably, each facet is formed over a plurality of polishing iterations and robotic arm 110 is configured to direct object 10 to imaging station 131 per iteration. According to some example embodiments, robotic arm 110 is also configured to direct object 10 to imaging station 131 at the end of the polishing process for grading object 10 and optionally for generating a signature key for object 10 based on image data obtained after the last polishing iteration.

FIG. 2 is a simplified schematic drawing of an example imaging system for the automated polishing apparatus. An imaging system 130 may be stationed in inspection station 131. Imaging system 130 includes both a microscope imaging system 257 for high resolution imaging, and a telecentric imaging system 256 for capturing 2D images of object 10 at a lower resolution as compared to the microscope imaging system 257. The imagers of microscope imaging system 257 and telecentric imaging system 256 are shown at 250 and 255, respectively. The illumination sources for microscope imaging system 257 and telecentric imaging system 256 are shown at 245 and 240, respectively. In some example embodiments, illumination source 240 for telecentric imaging system 256 is coaxial Köhler illumination.

The microscope imaging system 257 is configured to support a range of magnifications from 1X to 20X, typically with multiple lenses. The microscope imaging system 257 is an inverted microscope with objects under observation positioned above, rather than below, a microscope objective lens. The spatial resolution provided by microscope imaging system 257 is higher than the spatial resolution provided by telecentric imaging system 256. For example, the field-of-view area corresponding to a single pixel size of telecentric imaging system 256 can be 10-20 times larger, e.g. 16 times larger, than the field-of-view area corresponding to a single pixel size of microscope imaging system 257. Telecentric imaging system 256 is configured for generating a preliminary, e.g., coarse, 3D model of object 10 based on shadow modeling. Robotic arm 110 is configured to rotate and move object 10 with respect to telecentric imaging system 256 to capture silhouette images of object 10 at different orientations. The silhouettes may then be used to construct the 3D model. In some example embodiments, the coarse 3D model generated with telecentric imaging system 256 is then refined based on selected images captured with microscope imaging system 257.

Output from imaging system 256 microscope imaging system 257 is processed in processor 170. Processor 170 may be integrated into computing device 151 and/or may be a dedicated electronic circuit configured for image processing. Controller 150 manipulates 3D positioning of object 10 with respect to telecentric imaging system 256 and microscope imaging system 257. Optionally, processor 170 is also configured to process output from imaging system 257 to detect geometry and morphology of facet 15. Optionally, processor 170 is configured detect and segment artifacts on facet 15.

## MODELING OBJECT WITH AUTOMATED FACETING APPARATUS

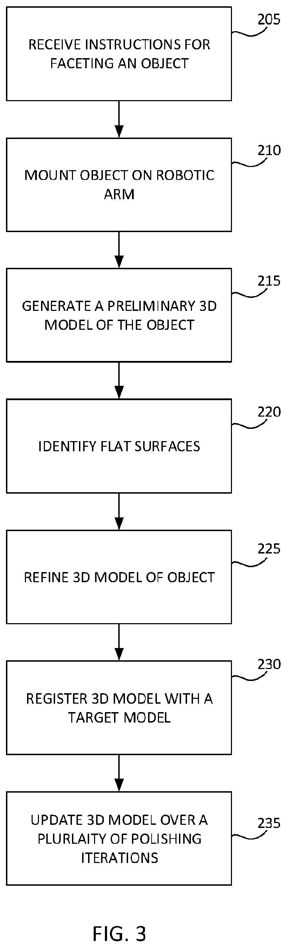

FIG. 3 is a simplified flow chart of an example method to generate a 3D model of an object for faceting. Typically, an object is received together with instructions for faceting (block 205). Instructions may include a 3D model of the object in its current configuration, e.g. rough object prior to faceting and a 3D model of target object. When a 3D model is available, the generated 3D model may be registered with the given 3D model so that the faceting instructions as indicated in the given 3D model may be related to the generated 3D model. Alternatively, the instructions may include proportions of target polish as an input, a required cut and/or symmetry grade and the target object may be generated by apparatus 100, e.g. at imaging station 131. For example, based on inspection at imaging station 131, a target object that provides highest yield of weight within the given proportions may be defined by apparatus 100. In order to translate the instructions received to instructions that may be performed with apparatus 100, a 3D model of the object is generated with apparatus 100. According to some example embodiments, prior to generating a 3D model with apparatus 100, the object is mounted on robotic arm (block 210). Since the object is mounted on the robotic arm, the 3D modeling is performed on the portion of the object that is exposed. For example, the object may first be mounted into pavilion press-pot where the designated crown is inside the press-pot and the designated pavilion is exposed.

A preliminary 3D model of object 10 as positioned on press-pot and robotic arm is generated (block 215). Optionally, the preliminary 3D model is a coarse model. Shadow modeling is used to generate the preliminary 3D model. For shadow modeling collimated backlight illumination, e.g. Köhler illumination may be used to capture a number of images from known rotation angles and a 3D model may be built based on back projections. Optionally, an imaging system other than the microscope imaging system, e.g., imaging system 256, may be used for building the preliminary 3D model. Flat surfaces on the object are identified based on the preliminary model (block 220) and used for refining the 3D model (block 225).

The preliminary 3D model is refined by capturing images of flat surfaces on the object with a microscope of the imaging system. Geometry of the flat surfaces may be determined and used to refine the preliminary 3D model to obtain a more accurate 3D model. The 3D model is also further refined over the polishing process as required. According to some example embodiments, if a target model is available, registration is performed between the 3D model as refined and the target model received (block 230). The generated 3D model is updated during the automated faceting process based on the object being directed to the inspection station between polishing iterations (block 235).

After polishing the portion of the object that is exposed based on the 3D model generated, the object may be mounted on the robotic arm in an alternate orientation to facet a portion of the object that was not exposed through the press-pot. With this arrangement, blocks 210-230 may be repeated to generate a 3D model of the portion of the object that was not initially exposed by the press-pot. For example when faceting the object with a crown and pavilion, the object may first be mounted with the designated pavilion part being exposed and after modeling and polishing, the object may then be mounted on the press-pot with the designated crown part exposed and the polished pavilion partially inside the press-pot. According to some example embodiments, once one side (e.g. the pavilion) has been faceted and the other side (e.g. the crown) has been mounted, the 3D model of the first side may be registered with the 3D model obtained for the second portion. Optionally and preferably, the partially exposed faceted portion of the object, e.g. partially exposed pavilion are used as flat surfaces for registering the pavilion with the crown portion based on which a complete 3D model of the polished object may be obtained.

## GENERATING ORDERED FACETING LIST

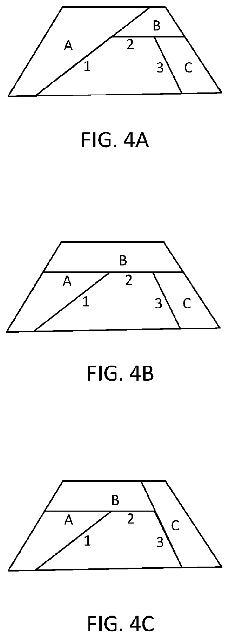

FIGS. 4A, 4B and 4C are simplified drawings depicting three example sets of instructions for forming a same plurality of facets on an object. The present inventors have found that the polishing process is further optimized based on selecting an order for faceting the facets. Optionally, the order is selected to reduce the time it takes to facet the object, improve the accuracy of the faceting and/or the quality achieved. For example, FIG. 4A-4C depict three different ordered lists for polishing facets 1, 2 and 3. The faceting polishing order shown in FIG. 4A is 1, 2, 3. Based on FIG. 4A, portion A removed to form facet 1 is significantly larger than portions B and C required to be removed for subsequently forming facets 2 and 3. The faceting polishing order shown in FIG. 4B is 2, 1, 3. Based on this order, a size of section B is increased at the expense of a size of section A when comparing to FIG. 4A. The faceting polishing order shown in FIG. 4C is 3, 2, 1. Based on this selected order, a size of section C is increased at the expense of section B. In this configuration, section A, B and C are similar in size. According to some example embodiments, one or more parameters may be considered when defining an order for faceting. Example parameters without limitation include polishing angle, the amount of material to remove, size of the facet, location of the facets, artifacts on the object, e.g. internal and external. For example, polishing may be easier and faster in some polishing angles and harder and slower in others due to the crystallographic orientation of the object. In some example embodiments, the order for faceting is defined to reduce the time it takes to facet the object. Alternatively and additionally, the order for faceting may be defined to increase the accuracy of the faceting and/or the quality of the final product.

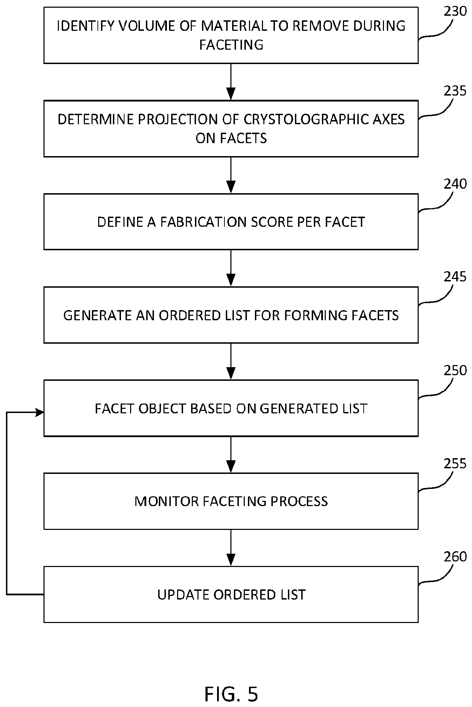

FIG. 5 is a simplified flow chart of an example method to generate an ordered list for forming facets on an object whose chemical structure is a crystal lattice. Volume of material to be removed during faceting is determined based on the 3D model of the object and a target model (block 230). Prior to generating an ordered list preliminary processing is performed on the object to predict and/or determine its crystallographic axes. In some configurations, projections of crystallographic axes on facets are determined based on the preliminary processing (block 235). In some configurations, a fabrication score per facet is defined to achieve a desired outcome, e.g. fast processing (block 240). The score may be based on information known, e.g. volume of material to be removed around each of the facets, orientation of the facet in relation to the crystallographic axes, and detected artifacts in the object. An ordered list for forming facets is generated based on the scores provided (block 245). Faceting may be performed by apparatus 100 based on generated list (block 250). Optionally and preferably the faceting process is monitored (block 255), e.g. on-the-fly monitoring and based on imaging between faceting iterations and the ordered list may be updated based on accumulated data from the monitoring (block 260).

## AUTOMATED DETECTION OF EFFECTIVE POLISHING DIRECTIONS

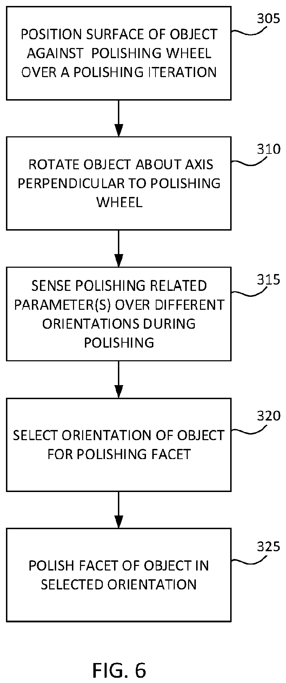

FIG. 6 is a simplified flow chart of an example method to select an orientation of a facet on a polishing wheel during polishing. A surface of the object is positioned against polishing wheel over a polishing iteration (block 305) with a robotic arm and the robotic arm is configured to rotate the object about axis perpendicular to the polishing wheel while the facet is in contact with the polishing wheel (block 310). In some configurations, one or more polishing related parameters are sensed as the object is being rotated (block 315). According to some example embodiments, an orientation for polishing may be selected based on outputs from the one or more polishing related parameters (block 320) and the facet may be polished in the selected orientation (block 325). A training or learning process may be applied during which sensed signals during successful polishing and as well as unsuccessful polishing are recorded and used as reference. Example polishing related parameters may include acceleration, vibration sensed based on contactless measurements, sound, heat, height displacement, current supplied to a motor of the polishing wheel or actuator of the robotic arm and imaging.

In some configurations, an accelerometer is mounted on the press-pot to detect vibrations on the object. Optionally, when the object is oriented in direction that is resistant to polishing, the object may bounce off the polishing wheel at a first range of frequencies and when the object is oriented in a direction that is conducive to polishing, frequency of vibrations may span over a second range of frequencies. Optionally, vibration amplitude may lower when the object is oriented in direction that is conducive to polishing. In another example, a rise in temperature of a polishing surface may indicate an orientation that is favorable for polishing. The inventors have found that significantly more heat is released from successfully breaking chemical bonds during polishing as compared to heat due to friction without succeeding in breaking the chemical bonds. Optionally, a rise in temperature may be sensed with an infrared (IR) camera, using IR absorption of laser (black body).

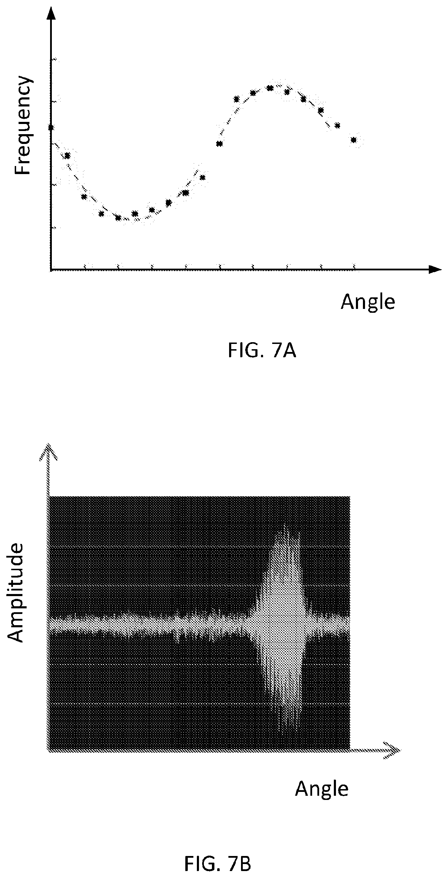

FIGS. 7A and 7B are example graphs showing output from sensors sensing a polishing related parameter while an object is rotated about an axis perpendicular to a polishing wheel during polishing. A vibration sensor may sense a frequency of vibration due to contact between the object and the polishing wheel over different polishing orientations as shown in FIG. 7A. Optionally, the frequency may be used to select a desired polishing orientation. In some example embodiments, the desired polishing orientation is an orientation that provides polishing with an improved material removal rate. In some configurations, sound over different polishing orientations as depicted for example in FIG. 7B may be used to detect orientations with relatively less resistance to polishing and/or faster polishing rate. For example, a frequency and/or amplitude may change when the object is at an orientation that is conducive to polishing. For example, when successfully polishing, some sound frequency components may increase their amplitude due to the removal of material.

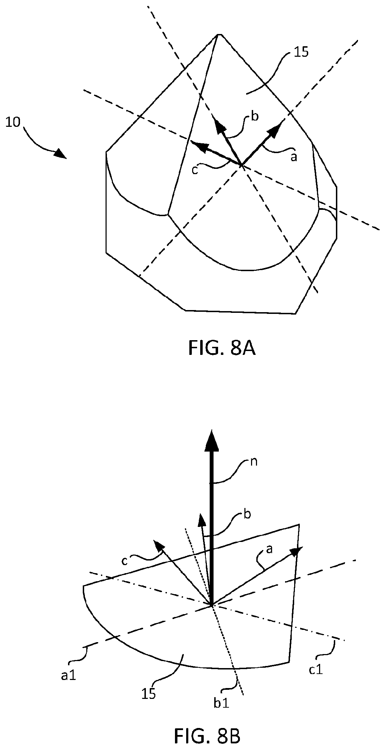

FIGS. 8A and 8B are simplified drawings showing example crystallographic axes in relation to a facet of an object. When polishing a material whose chemical structure is a crystal lattice, e.g. a diamond by pressing a facet against a polishing wheel, the facet's orientation with respect to the wheel's direction of rotation affects the ability to polish the facet. Due to the crystal structure, the facet may be more easily polished in directions that correspond to orthogonal projections of the crystallographic axes on the facet and less easily polished in other orientations. FIG. 8A depicts an example object 10 that has a crystallic structure and its crystallographic axes represented by vectors a, b, and c. The easy or effective polishing directions for each facet is the direction that corresponds to orthogonal projections of a, b, and/or c. As an example, projections on a facet 15 are a1, b1 and c1 are shown in FIG. 8B. Traditionally, a manual trial and error technique is used to detect easy polishing directions for each facet by first attempting different orientations until a suitable orientation is found and then polishing in that orientation. This trial and error technique can be time consuming. Instead, the present inventors have found that based on detecting a plurality of candidate projections on one or more facets, the crystallographic axes for the object may be predicted. Once the crystallographic axes are predicted, polishing directions may be selected for other facets of the object without trial and error. The present inventors have also found that the crystallographic axes may be predicted based on detecting at least four candidate projections of the crystallographic axes. Optionally, the four candidate projections may be detected on a single facet or on 1-3 facets. Optionally, the prediction may be corrected or refined over the course of polishing additional facets.

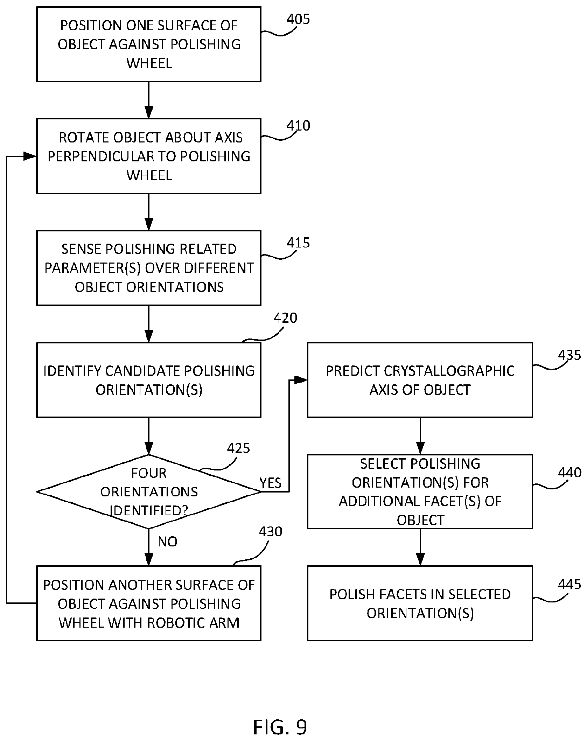

FIG. 9 is a simplified flow chart of an example method to predict crystallographic axes of the object. An initial trial-and-error process is employed for attempting to polish multiple directions on a facet, and an easy direction may be determined as the direction that is polished at the greatest removal rate during a given interval of time. The trial-and-error process begins by placing one surface of object against a polishing wheel (block 405) and rotating the object about an axis perpendicular to said polishing wheel (block 410). One or more polishing related parameter(s) are sensed over different object orientations with surface on polishing wheel (block 415). Representative polishing related parameters include, without limitation, acceleration, vibration sensed based on contactless measurements, sound, heat, height displacement, pressure, current supplied to a motor of the polishing wheel or actuator of the robotic arm and imaging. In some example embodiments, the robotic arm is configured to rotate the object with 360° and/or +/-180° so that all orientations may be sensed. Other ranges are also contemplated, e.g., 180°, 270° or 90°. Optionally, the object is rotated in a continuous motion, e.g. at an angular speed of 0.5-2 rad/s. In some configurations, the rotation may be performed in discrete steps and one or more polishing parameters may be sensed per discrete steps.

A removal rate is determined based on one or more of the polishing related parameters sensed. The removal rate may be defined based on volume (for example, $\mu m^3/h$) or weight (for example, mg/h). In some example embodiments, the removal rate may be determined based on parameters detected on-the-fly, e.g. based on sound frequencies and displacement progress signals to detect polishing directions. Optionally, the volume is determined based on imaging the facet. Optionally, the imaging is performed at the imaging station between trial polishing intervals at defined orientations. For example, the volume removed may be determined by a 3D to 2D match, or registration, between an image of the current facet and the previously determined 3D model, as described above. Inspection may be repeated for a plurality of orientations. The inspection may be used in addition to the on-the-fly detection and removal rate may be determined based on imaging as well as based on the on-the-fly detection. Optionally, the imaging is applied as a subsequent step to refine the detection of candidate polishing directions. According to some example embodiments, one or more candidate polishing orientations may be sensed for each facet tested (block 420). Optionally, a primary as well as one or more secondary candidate polishing orientations may be detected. The present inventors have found that 1-4 candidate polishing orientations may be detected per facet. In some configurations, when at least four candidate polishing orientations are detected, prediction may be initiated (block 425, "YES"), and when less than four candidate polishing orientations are detected (block 425, "NO") one or more additional facets may be tested to detect for candidate polishing orientations until at least four orientations have been found (block 430).

Once at least four orientations have been detected (block 425, "YES"), the detected orientations may be used to predict the crystallographic axes of the object (block 435). Optionally, additional facets may be tested to improve the prediction. The predicted crystallographic axes may be stored and used to select polishing orientations for polishing other facets of the object without performing the trial and error routine for the facet (block 440). Each of the other facets may then be polished in their selected orientations (block 445). In some configurations, orthogonal projections of the predicted crystallographic axes may be computed for each of the other facets and a polishing orientation may be selected to correspond to one of the orthogonal projections. Optionally, polishing orientation selected for a facet may be a polishing orientation corresponding to the largest orthogonal projection of a crystallographic axis on this facet. Other considerations may be applied in selection, e.g. morphology of the facet. The present inventors have found that the prediction method as described herein reduces the time needed to complete the faceting and also avoids potential damage to the object.

In some configurations, the prediction considers the object as formed from a single crystal and therefore as having a common crystallographic set of axes and that easy and/or effective polishing directions are the orthogonal projections of the crystallographic axes on a facet. In some embodiments of the present invention the crystallographic axes are extrapolated from easy and/or effective polishing directions that have been identified during the trial and error process performed on 1-3 facets, based on a 3D model of the object constructed as further detailed hereinabove. Optionally, each of the candidate polishing directions detected on a facet may be defined by a pair of Cartesian coordinates at an arbitrary point on the facet. Each pair of Cartesian coordinates define a vector in a candidate polishing directions. In some configurations, a plurality of possible orientations of the crystallographic axes may be inferred based on the extrapolations performed. In some configurations, the prediction may be improved based on computing an angular deviation between the estimated normal projection determined from an initial extrapolation of the predicted crystallographic axes and the actual polishing direction as determined from the detected removal rate during the trial and error procedure. Optionally, a sum of squared angular deviations related to the different polished facets of the first set are computed and used to refine the prediction. Optionally, if no convergence is detected an additional trial and error procedure may be initiated to obtain more data for improving the prediction.

## ON-THE-FLY ADAPTION OF POLISHING PARAMETERS

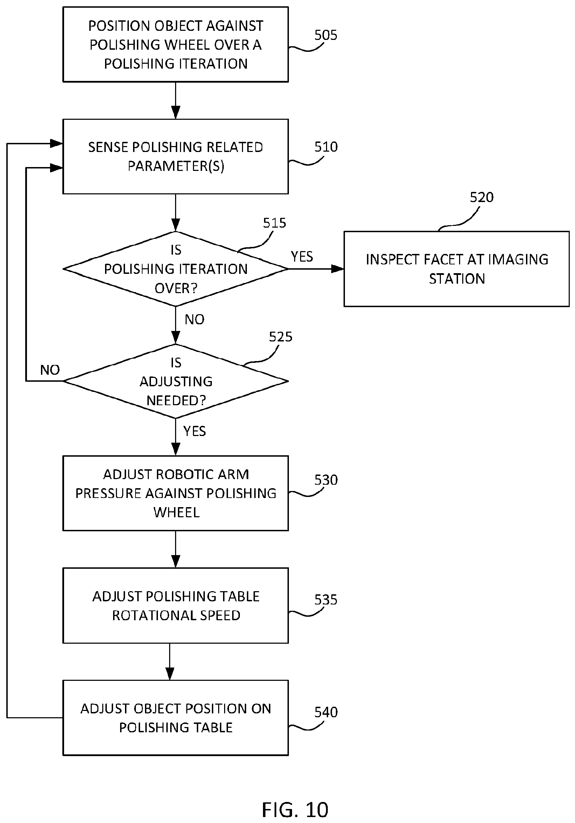

FIG. 10 is a simplified flow chart of an example method to adjust a polishing on-the-fly with the automated polishing apparatus. Each facet may be polished over one or a plurality of polishing iterations. After a polishing iteration, the object may be inspected in the imaging station. The 3D model may be updated based on the inspection and polishing instructions may be updated. A polishing iteration may be defined based on a selected parameter sensed during polishing and/or based on estimated material removed. Optionally, duration of each iteration is 1 second to 1 minute, e.g. a few seconds.

A polishing iteration begins with the object being positioned against polishing wheel (block 505). During polishing, one or more polishing related parameters are sensed, e.g. monitored and used to monitor the estimated material removed on-the-fly. Example polishing related parameters include vibration, temperature, height along the Z axis of the robotic arm, electrical current supplied to the robotic arm to press the object against the polishing wheel, current supplied to the polishing wheel. According to some example embodiments, based on the one or more polishing related parameters and/or estimated material removed the iteration is terminated (block 515, "YES"). Optionally, an average area of the facet is estimated based on the sensing and/or based on the estimated material removed and modeled 3D geometry. Optionally, the iteration continues until a defined amount of material is estimated to have been removed and/or a defined facet size or shape has been reached, both as long as temperature is below a defined threshold and/or as long as a defined iteration duration has not been exceeded. At the end of the polishing iteration, the object is moved to the imaging station with the robotic arm for inspection (block 520).

In some configurations, the one or more polishing related parameters sensed during the iteration are also used to adjust polishing parameters on-the-fly (block 525). Optionally adjustments include one or more of adjusting pressure at which the robotic arm presses the object against the polishing wheel (block 530). Alternatively or additionally, adjustments include adjusting the rate at which the polishing wheel is rotating (block 535). Alternatively or additionally, adjustments include changing the track used for polishing by shifting the object along a diameter of the polishing wheel (block 540). Additional parameters that may be controlled on-the-fly include polishing direction, polishing track diameter, polishing track roughness, and duration of the polishing interval. The adjustments may be based on for example sensed temperature, polishing rate, vibration, static and dynamic friction and warping of the apparatus. The parameters and their thresholds are optionally and preferably selected to improve the smoothness, and/or accuracy of the polishing, and to reduce damage to the object during polishing.

When the stopping criterion of the iteration relates to the amount of material estimated to have been removed, the amount of material removed can be estimated as the change $r$ in the height $h$ of the object per unit time $t$ ($r=h/t$) for a given surface area of the facet. The relation between $r$, the pressure $P$ applied by the object to the wheel, and the linear velocity of the wheel is given by $r=KPv$, where $K$ is a Preston coefficient. The Preston coefficient may be determined empirically for a particular apparatus. The adaptation according to these is selected to maintain a generally constant value for r. This can be done by selecting the force applied by the object on the wheel, based on a predetermined value of r, the rotational velocity of the wheel, and an estimated area A of the facet being polished. According to some example embodiments, A is estimated on-the-fly based on the detected change in height h and a previously computed area of the facet based on imaging. Specifically, the force F applied by the object can be calculated as $F=r/(KAv)$. The area may also computed between polishing iterations for example, by imaging the facet intermittently with the polishing.

It is appreciated that the force applied by the object depends linearly on the electrical current used to control the robotic arm. Thus, the current is varied based on the value of the area A so as to maintain a generally constant value of r. This can be done without selecting the force directly. For example, a look up table can be prepared in advance, which look up table can include entries which relate the current to the force and the area. In these embodiments, the method calculates the ratio $r/(Kv)$, and defines a query force by multiplying this ratio by $A/A_{LT}$, where A is the measured or estimated area of the facet and $A_{LT}$ is an area entry of the lookup table. The method can then search the look up table for a look up table force value that matches the query force, extract the corresponding electric current from the look up table, and applies the extracted current to control the force of robotic from on the object. When no exact match for the query force is found, the method can use interpolation to extract an interpolated value for the electric current.

A correlation between the one or more polishing parameters and the Force (F) may be determined by a learning phase that may involve generating reference information by measuring large number of facets while they are being polished and recording the frequencies and/or motor current while comparing it to the actual removal rate of material. In some configurations, operation of the robotic arm and/or the polishing wheel may be adjusted to maintain rate of material removal r substantially constant.

## ITERATIVE ADAPTION OF POLISHING PARAMETERS

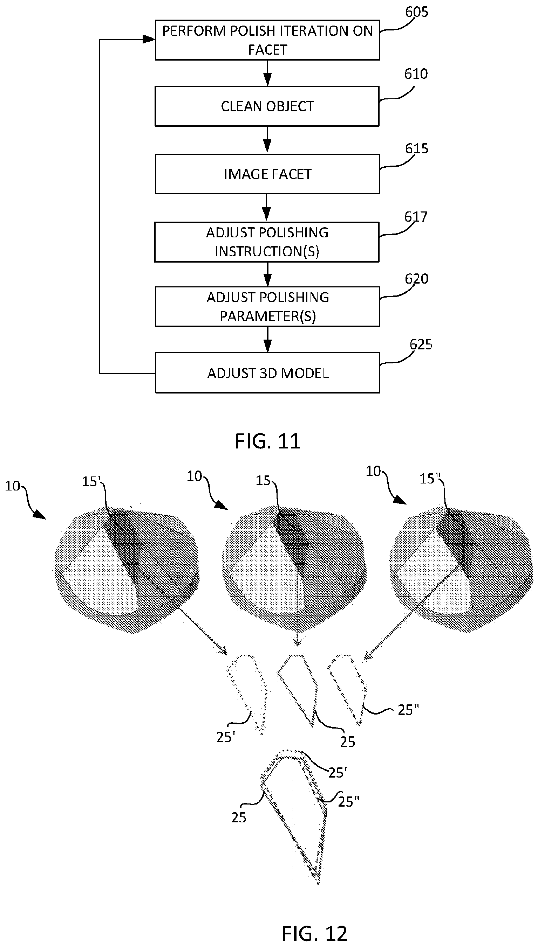

FIG. 11 is a simplified flow chart of an example method to adjust the polishing based on image data captured with the automated polishing apparatus. Each facet may be formed over 1-20 polishing iterations. Between iterations, the object may be inspected, the 3D model of the object may be updated, and adjustments to the faceting process may be defined based on the inspection. In some configurations, an iteration cycle may include polish the facet over a defined iteration (block 605). The iteration may be defined based on a duration, a change in detected height as well as other polishing related parameters as described herein. At the end of an iteration, the facet may be cleaned (block 610). Optionally and preferably, steam is sprayed on the facet to clean it. In some configurations, the object is directed to the imaging station and is imaged (block 615). According to some example embodiments, morphology of the facet is detected and/or characterized based on the imaging. Optionally, artifacts on the facet's surface and/or internal artifacts may be detected based on the imaging. In some configurations, segmentation and classification of surface artifacts are performed. Optionally, bright field and/or dark field illumination may be used for the segmentation and classification. Optionally, a polish grade is detected based on said imaging.

Instructions for polishing the object may be adjusted based on the imaging (block 617). An example adjustment may include increasing the polishing depth beyond the initial plan, when detecting an uneven finished surface. Another example adjustment may include changing polishing direction based on detecting a crack. Yet another example adjustment may be to move on to polishing a different facet and returning to the current facet at later stage, e.g. push the current facet to the end of the polishing order queue.

In some configurations, one or more polishing parameters are adjusted based on the imaging (block 620). An example adjustment may include reducing pressure on the object during polishing based on detecting an artifact. Optionally, the reduced pressure may provide reducing the temperature of the object during polishing. Another example adjustment may include altering a track used for polishing based on detecting scratches. Scratches may indicate that a polishing track has been used up and requires replacement. An alternate track may selected until the track is replaced. According to some example embodiments, the 3D model is adjusted to reflect the new structure of the object (block 625) based on the polishing iteration. Optionally, adjustments may be made to subsequent polishing iterations based on the updated 3D model.

FIG. 12 is a simplified schematic drawing of a modeled geometry for an example modeled facet and two example discrepancies in facet geometry that may occur during faceting in accordance with some example embodiments. Facet 15 represents a facet as modelled in a 3D model of object 10. A geometry of facet 15 is represented by contour 25. In some configurations, an actual corresponding facet 15' may have been polished too deep so that contour 25' has a larger surface area than the 3D model contour 25. In some example embodiments, an actual corresponding facet 15" may have been polished with error in angle (tilt) and a corresponding contour 25" may be skewed in relation to 3D model contour 25. These discrepancies are corrected for in the updated 3D model. These discrepancies may also be a cause to modify the subsequent polishing instructions and perhaps even the remaining facets' ordering.

## INSPECTION OF THE OBJECT POST FACETING

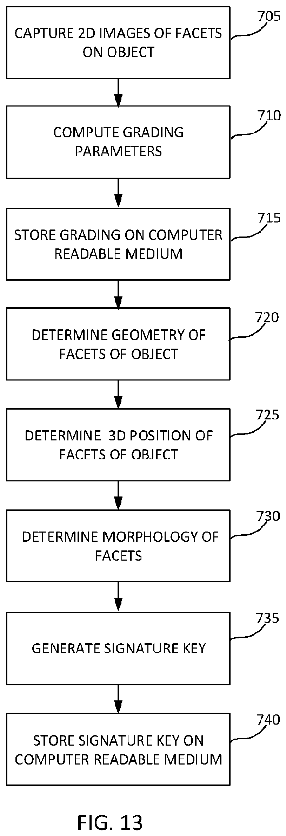

FIG. 13 is a simplified flow chart of an example method to detect and record parameters of the object at the end of the faceting process. After an object has been faceted and before dismounting the object from the robotic arm, the robotic arm directs the object to the imaging station 131 for final inspection and characterization. In some configurations, 2D images of each of the facets of the object is captured with microscope 250 in imaging system 130 (block 705). In some configurations, grading parameters are determined based on the microscope images captured (block 710). Example grading parameters include, cut grade, symmetry grade and surface polish grade. The grading may be stored on computer readable medium for reference (block 715).

In some configurations, the 2D images are also used to generate a signature key for the object. The signature key may be generated based on characterizing features of the facets in the image data. In some example embodiments, geometry of each of the facets is determined based on the 2D images captured (block 720). 3D position of each of the facets of object is determined (block 725). 3D position may be defined based on the coordinate system of robotic arm 110 and/or based on the 3D model generated for the object. In some example embodiments, morphology of one or more facets is characterized based on the imaging (block 730). Optionally, detected artifacts may be segmented and classified and/or characterized. In some configurations, a signature key is generated based on the detected geometry, positioning and morphology of the different facets (block 735). The signature key is stored on computer readable medium for reference (block 740). Blocks 705-740 may be performed once after faceting a pavilion of the object and repeated after faceting the crown of the object. Optionally, the grading may be defined after inspecting both the crown and the pavilion. Optionally, the signature key is generated after inspecting both the crown and the pavilion.

## DUAL PROCESS FACETING APPARATUS

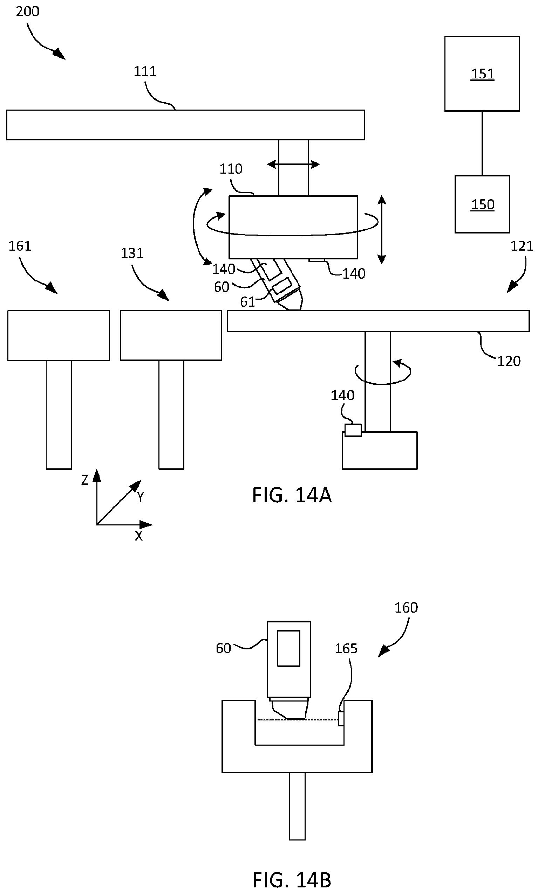

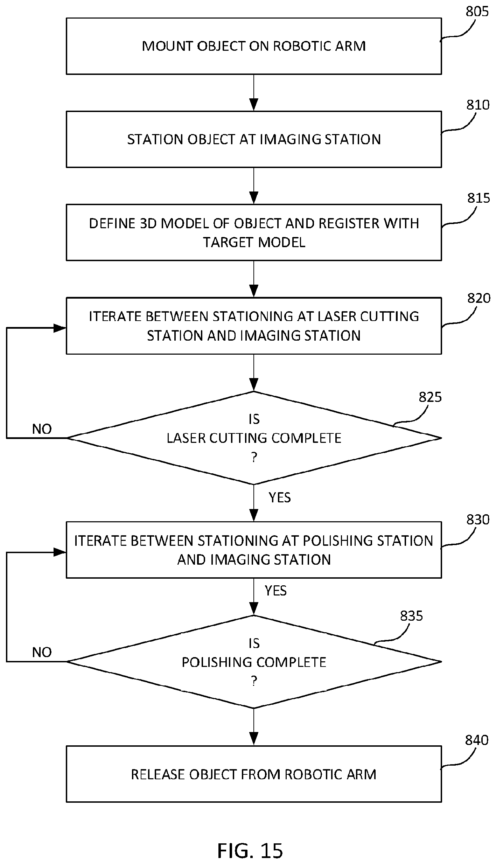

Reference is now made to FIG. 14A showing a simplified schematic drawing of an example automated faceting apparatus including both a laser cutting station and a polishing station, to FIG. 14B showing a simplified schematic drawing of a laser cutting station and to FIG. 15 showing simplified flow chart of an example method to combine laser cutting and polishing for faceting an object.

An automated apparatus 700 configured for faceting an object 10 includes both a laser cutting station 171 and a polishing station 131 for processing the object. Laser cutting may significantly reduce the time it takes to facet object 10. In some example embodiments, the process is defined so that a first 70 % - 90 % of the material is removed based on laser cutting at laser cutting station 171 and the remainder of the material is removed based on polishing at polishing station 121. Although polishing is generally a slower process, it is advantageous in that it typically provides more accuracy and a better finish.

The processing starts with mounting object 10 on robotic arm 110 (block 805) and stationing robotic arm 110 at imaging station 131 (block 810). At imaging station 131, a 3D model of object is computed based on the coordinate system of apparatus 700 and the model is registered with a target model when available (block 815). A set of instructions for faceting object 10 may be defined. The instructions may include defining a first portion of the object to be removed with laser cutter 175 and a second portion of object 10 to be removed with polishing wheel 120. In some configurations, the first portion is defined to remove 70%-90% of material for forming each facet so that 10%-30% of the remaining material is removed by polishing. In this manner, polishing may be applied to complete each of the facets at a desired accuracy and polish finish.

In some configurations, over a first plurality of faceting iterations, robotic arm toggles between stationing object 10 at laser cutting station 171 for cutting with a laser beam 175 and stationing object 10 at imaging station for inspection (block 820). Optionally, one or more of the laser cutting parameters and/or the 3D model is updated over the laser cutting iterations based on the inspection in imaging station 131. Optionally, the toggling is only initiated once per facet or once per a plurality of facets. In some example embodiments, toggling is not required during laser cutting and inspection is performed at the end of the laser cutting process. In some configurations, laser cutter 175 is stationary and robotic arm 110 is configured to orient object 10 with respect to laser cutter 175. Optionally, the laser cutter may be configured to move in one or more directions and object 10 is held stationary in laser cutting station 171.

When the laser cutting is completed, e.g. when the first portion has been removed (block 825), robotic arm 110 begins iterating between stationing the object at polishing station 121 and imaging station 131 (block 830). One or more of the polishing parameters and/or the 3D model may also be updated over the polishing iterations based on the inspection. Once the polishing is complete (block 835) the object may be removed from robotic arm 110 (block 840). In some configurations, the object is mounted again on the robotic arm 110 with a different part of the object being exposed, e.g. with the designated crown portion being exposed after the pavilion portion has been faceted, and blocks 805-840 are repeated to facet the additional part of the object.

**PRESS-POT IDENTIFICATION CODE**

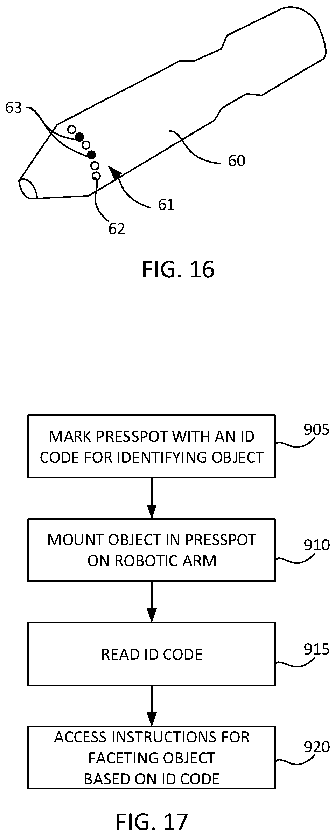

FIG. 16 is an example press-pot for holding an object. An ID code 65 that is configured to identify an object may be positioned on press-pot 60 that is holding the object. In some configurations, press-pot 60 is formed with a plurality of blind holes 62 that are configured to receive plugs 63. Optionally a pattern of plugged and unplugged blind holes 62 defines the ID code. In some example embodiments, imaging system 130 is configured to identify the ID code based on imaging. Other methods of adding an ID code are contemplated. For example a barcode may be attached to press-pot 60. Optionally, and RF ID tag may be attached to press-pot 60 and the ID code may be read with a dedicated reader.

FIG. 17 is a simplified flow chart of an example method to identify object with press-pot identification code. A press-pot is marked with an ID code for identifying an object (block 905) and the object with the press-pot is mounted on the robotic arm (block 910). In some configurations, the ID code is read in the imaging station (block 915) and the instructions for faceting an object are accessed based on the reading (block 920). Optionally, an operator may receive a plurality of objects for faceting at any one time. Optionally, each of the objects may be mounted on a press-pot and marked with an ID code. The plurality of objects may be processed one at a time and mix-ups between the objects may be avoided with the ID code.

In the apparatus and/or method disclosed herein, several selected tasks could be implemented by hardware, by software or by firmware or by a combination thereof using an operating system.

For example, hardware for performing selected tasks could be implemented as a chip or a circuit. As software, selected tasks could be implemented as a plurality of software instructions being executed by a computer using any suitable operating system. In some configurations, one or more tasks according to method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

**EXAMPLE**

Reference is now made to the following example method that may be used to predict crystallographic axes based on at least 4 empirically detected favorable polishing directions on a diamond.

The input for the method is at least four favorable polishing directions empirically detected on 1-3 facets on an object whose chemical structure is a crystal lattice, e.g. a diamond. Output of the method is the orientation of the crystallographic axis vectors, *a, b and* c (in the same Cartesian coordinate system) and predicted polishing direction for each facet.

The method described below is for the case in which the favorable polishing directions are the orthogonal projections of the *a, b* or *c* crystallographic axes on the facets of the crystal, and the object is in the form of a single crystal.

The method assumes that the initial orientation of the crystal is unknown, and uses all input directions relative to the current orientation of the crystal. Given the known 3D model, a geometric relationship between the input facets is known, allowing the extrapolation of the original crystallographic axes whose projections resulted in our input. Herein, Cartesian coordinates are used to describe directions of the vectors a, b and c, e.g. $a = a_x X + a_y Y + a_z$, etc.

With the crystallographic axes predicted, the method may calculate favorable polishing directions for each potential face of the polyhedron for which no trial-and-error procedure has been employed (as shown in FIG. 8B). For example, three favorable polishing directions, $(a_1, b_1, c_1)$, in the face normal to a vector *n* are defined by: $a_1 = [n \times [a \times n]]$, $b_1 = [n \times [b \times n]]$, $c_1 = [n \times [c \times n]]$. The symbol $\times$ stands for the cross product. The calculation of vector product in Cartesian coordinate system is defined by Equation (1):

$$[A \times B] = (A_y B_z - A_z B_y)X + (A_z B_x - A_x B_z)Y + (A_x B_y - A_y B_x)Z \quad (1)$$

The input parameters to the method may be multiple coordinates (for example 5-20, e.g., 10 coordinates) for each facet. These are Cartesian coordinates of three arbitrary points (e.g. the coordinates of three vertices, $R_1 = \{X_{11}, X_{12}, X_{13}\}$, $R_2 = \{X_{21}, X_{22}, X_{23}\}$, $R_3 = \{X_{31}, X_{32}, X_{33}\}$) and the direction of easy polishing (the angle between the easy polishing direction and $R_2 - R_1$ direction). Any other format of the input data may be used as needed.

The output parameters to the method are preferably the orientation of the vectors, *a, b* and *c* (for example, in the same Cartesian coordinate system) and predicted polishing direction for each facet.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the present invention as defined in

**EP 4 114 614 B1**

the appended claims.

**Claims**

1. A method for faceting of an object, comprising:

   obtaining a three-dimensional model of the object and a target three-dimensional shape having a plurality of facets;
   the method being **characterised by**:

   for each of a plurality of facets of said target shape, calculating based on said model an amount of material to be removed from the object to form said facet; and
   generating an ordered list of said plurality of facets in a manner that said calculated amounts are descending within said list; and
   wherein said polishing comprises executing a protocol for polishing the plurality of facets of the object according to said ordered list.

2. The method according to claim 1, wherein said generating said ordered list is also based on polishing angle.

3. The method according to any of claims 1 and 2, wherein said generating said ordered list is also based on a size of said facet.

4. The method according to any of claims 1-3, wherein said generating said ordered list is also based on a location of the facet.

5. The method according to any of claims 1-4, wherein said generating said ordered list is also based on internal artifacts on the object.

6. The method according to any of claims 1-5, wherein said generating said ordered list is also based on external artifacts on the object.

7. A method for faceting of an object, comprising:

   obtaining a three-dimensional model of the object, and a target three-dimensional shape defining the multiple facets;
   the method being **characterised by**:

   each of a plurality of facets of said target shape, calculating based on said model a projection of a crystallographic axis of the object onto said facet, an amount of material to be removed from the object to form said facet, and a fabrication score which is a weighted combination of said projection and said amount; and
   generating an ordered list of said plurality of facets in a manner that said calculated scores are descending within said list;
   wherein said polishing comprises executing a protocol for forming said plurality of facets according to said ordered list.

8. The method of claim 7, comprising:

   forming at least two facets of the object with an automated polishing apparatus;
   sensing a polishing related parameter during said forming; and
   predicting crystallographic axes of the object based on said sensing;
   wherein said generating said ordered list of said plurality of facets is also based on said prediction.

9. The method according to any one of claims 1-8, comprising imaging the object intermittently with said forming to determine geometry and morphology of a facet being formed, and updating said ordered list based on said imaging.

10. The method according to any one of claims 1-9 comprising:

13

imaging the object intermittently with said forming to detect morphology; and updating instructions for polishing subsequent polishing iterations based on said detected morphology.

11. The method according to claim 10, wherein detecting morphology includes segmentation and classification of artifacts in or at a surface of a facet.

12. The method according to claim 10, wherein updating instructions is selected from the group consisting of increasing the polishing depth beyond an initial plan, changing polishing direction, changing polishing pressure, changing polishing wheel velocity, changing linear movement on the wheel, changing polishing interval, altering a track of a polishing wheel used for polishing and progressing to polishing a different facet before completing polishing of a current facet.

**Patentansprüche**

1. Ein Verfahren zum Facettieren eines Objekts, umfassend:

   Ermitteln eines dreidimensionalen Modells des Objekts und einer dreidimensionalen Zielform mit einer Vielzahl von Facetten;
   wobei das Verfahren **gekennzeichnet ist durch**:

   Berechnen einer Menge von Material, das von dem Objekt entfernt werden muss, um die Facette auszubilden, für jede einer Vielzahl von Facetten der Zielform basierend auf dem Modell; und
   Erzeugen einer sortierten Liste der Vielzahl von Facetten in einer Weise, dass die berechneten Mengen innerhalb der Liste absteigend sind; und
   wobei das Polieren das Ausführen eines Protokolls zum Polieren der Vielzahl von Facetten des Objekts gemäß der sortierten Liste umfasst.

2. Das Verfahren nach Anspruch 1, wobei das Erzeugen der sortierten Liste auch auf dem Polierwinkel basiert.

3. Das Verfahren nach einem der Ansprüche 1 und 2, wobei das Erzeugen der sortierten Liste auch auf einer Größe der Facette basiert.

4. Das Verfahren nach einem der Ansprüche 1 bis 3, wobei das Erzeugen der sortierten Liste auch auf einer Position der Facette basiert.

5. Das Verfahren nach einem der Ansprüche 1 bis 4, wobei das Erzeugen der sortierten Liste auch auf internen Artefakten auf dem Objekt basiert.

6. Verfahren nach einem der Ansprüche 1 bis 5, wobei das Erzeugen der sortierten Liste auch auf externen Artefakten auf dem Objekt basiert.

7. Ein Verfahren zum Facettieren eines Objekts, umfassend:

   Ermitteln eines dreidimensionalen Modells des Objekts und einer dreidimensionalen Zielform, die die mehreren Facetten definiert;
   wobei das Verfahren **gekennzeichnet ist durch**:

   Berechnen einer Projektion einer kristallographischen Achse des Objekts auf die Facette, einer Menge an Material, das von dem Objekt entfernt werden muss, um die Facette auszubilden, und einer Fertigungsbewertung, die eine gewichtete Kombination der Projektion und der Menge ist, für jede einer Vielzahl von Facetten der Zielform basierend auf dem Modell; und
   Erzeugen einer sortierten Liste der Vielzahl von Facetten in einer Weise, dass die berechneten Bewertungen innerhalb der Liste absteigend sind;
   wobei das Polieren das Ausführen eines Protokolls zum Ausbilden der Vielzahl von Facetten gemäß der sortierten Liste umfasst.

8. Das Verfahren nach Anspruch 7, umfassend:

Ausbilden mindestens zweier Facetten des Objekts mit einer automatisierten Poliervorrichtung;
Erfassen eines polierbezogenen Parameters während des Ausbildens; und
Prognostizieren kristallographischer Achsen des Objekts basierend auf der Erfassung;
wobei das Erzeugen der sortierten Liste der Vielzahl von Facetten auch auf der Prognose basiert.

**9.** Das Verfahren nach einem der Ansprüche 1 bis 8, umfassend die intermittierende Bildaufnahme des Objekts während des Formens, um die Geometrie und Morphologie einer Facette, die ausgebildet wird, zu bestimmen, und das Aktualisieren der sortierten Liste basierend auf der Bildaufnahme.

**10.** Das Verfahren nach einem der Ansprüche 1 bis 9, umfassend:
die intermittierende Bildaufnahme des Objekts mit dem Ausbilden, um die Morphologie zu detektieren; und das Aktualisieren von Anweisungen zum Polieren nachfolgender Polieriterationen auf der Grundlage der detektierten Morphologie.

**11.** Das Verfahren nach Anspruch 10, wobei das Detektieren der Morphologie die Segmentierung und Klassifizierung von Artefakten in oder an einer Oberfläche einer Facette beinhaltet.

**12.** Das Verfahren nach Anspruch 10, wobei das Aktualisieren von Anweisungen aus der Gruppe ausgewählt wird, die aus Erhöhen der Poliertiefe über einen anfänglichen Plan hinaus, Ändern der Polierrichtung, Ändern des Polierdrucks, Ändern der Polierscheibengeschwindigkeit, Ändern der linearen Bewegung auf der Scheibe, Ändern des Polierintervalls, Ändern einer Spur einer zum Polieren verwendeten Polierscheibe und Fortfahren mit dem Polieren einer anderen Facette vor dem Beenden des Polierens einer aktuellen Facette besteht.

**Revendications**

**1.** Procédé de facettage d'un objet, comprenant :

l'obtention d'un modèle tridimensionnel de l'objet et d'une forme tridimensionnelle cible ayant une pluralité de facettes ;
le procédé étant **caractérisé par** :

pour chacune d'une pluralité de facettes de ladite forme cible, le calcul, sur la base dudit modèle, d'une quantité de matériau à enlever de l'objet pour former ladite facette ; et
la génération d'une liste ordonnée de ladite pluralité de facettes d'une manière telle que lesdites quantités calculées descendent à l'intérieur de ladite liste ; et
où ledit polissage comprend l'exécution d'un protocole pour polir la pluralité de facettes de l'objet selon ladite liste ordonnée.

**2.** Procédé selon la revendication 1, dans lequel ladite génération de ladite liste ordonnée est basée aussi sur un angle de polissage.

**3.** Procédé selon l'une quelconque des revendications 1 et 2, dans lequel ladite génération de ladite liste ordonnée est basée aussi sur une taille de ladite facette.

**4.** Procédé selon l'une quelconque des revendications 1 à 3, dans lequel ladite génération de ladite liste ordonnée est basée aussi sur un emplacement de la facette.

**5.** Procédé selon l'une quelconque des revendications 1 à 4, dans lequel ladite génération de ladite liste ordonnée est basée aussi sur des artefacts internes sur l'objet.

**6.** Procédé selon l'une quelconque des revendications 1 à 5, dans lequel ladite génération de ladite liste ordonnée est basée aussi sur des artefacts externes sur l'objet.

**7.** Procédé de facettage d'un objet, comprenant :

l'obtention d'un modèle tridimensionnel de l'objet, et d'une forme tridimensionnelle cible définissant les multiples facettes ;

le procédé étant **caractérisé par** :

chacune d'une pluralité de facettes de ladite forme cible, le calcul, sur la base dudit modèle, d'une projection d'un axe cristallographique de l'objet sur ladite facette, d'une quantité de matériau à enlever de l'objet pour former ladite facette, et d'un score de fabrication qui est une combinaison pondérée de ladite projection et de ladite quantité ; et

la génération d'une liste ordonnée de ladite pluralité de facettes d'une manière telle que lesdits scores calculés descendent à l'intérieur de ladite liste ;

où ledit polissage comprend l'exécution d'un protocole pour former ladite pluralité de facettes selon ladite liste ordonnée.

8. Procédé selon la revendication 7, comprenant :

la formation d'au moins deux facettes de l'objet avec un appareil de polissage automatisé ;

la détection d'un paramètre lié au polissage pendant ladite formation ; et

la prédiction d'axes cristallographiques de l'objet sur la base de ladite détection ;

où ladite génération de ladite liste ordonnée de ladite pluralité de facettes est basée aussi sur ladite prédiction.

9. Procédé selon l'une quelconque des revendications 1 à 8, comprenant l'imagerie de l'objet de manière intermittente avec ladite formation pour déterminer la géométrie et la morphologie d'une facette en cours de formation, et la mise à jour de ladite liste ordonnée sur la base de ladite imagerie.

10. Procédé selon l'une quelconque des revendications 1 à 9, comprenant :
l'imagerie de l'objet de manière intermittente avec ladite formation pour détecter la morphologie ; et la mise à jour d'instructions pour polir des itérations de polissage ultérieures sur la base de ladite morphologie détectée.

11. Procédé selon la revendication 10, dans lequel la détection de la morphologie comprend la segmentation et la classification d'artefacts dans ou au niveau d'une surface d'une facette.

12. Procédé selon la revendication 10, dans lequel la mise à jour d'instructions est sélectionnée dans le groupe consistant en l'augmentation de la profondeur de polissage au-delà d'un plan initial, le changement de la direction de polissage, le changement de la pression de polissage, le changement de la vitesse de la roue de polissage, le changement du mouvement linéaire sur la roue, le changement de l'intervalle de polissage, la modification d'une piste d'une roue de polissage utilisée pour le polissage et la progression vers le polissage d'une facette différente avant l'achèvement du polissage d'une facette courante.

FIG. 1

FIG. 2

FIG. 3

FIG. 4A

FIG. 4B

FIG. 4C

IDENTIFY VOLUME OF MATERIAL TO REMOVE DURING FACETING — 230

DETERMINE PROJECTION OF CRYSTOLOGRAPHIC AXES ON FACETS — 235

DEFINE A FABRICATION SCORE PER FACET — 240

GENERATE AN ORDERED LIST FOR FORMING FACETS — 245

FACET OBJECT BASED ON GENERATED LIST — 250

MONITOR FACETING PROCESS — 255

UPDATE ORDERED LIST — 260

FIG. 5

POSITION SURFACE OF OBJECT
AGAINST POLISHING WHEEL
OVER A POLISHING ITERATION — 305

↓

ROTATE OBJECT ABOUT AXIS
PERPENDICULAR TO POLISHING
WHEEL — 310

↓

SENSE POLISHING RELATED
PARAMETER(S) OVER DIFFERENT
ORIENTATIONS DURING
POLISHING — 315

↓

SELECT ORIENTATION OF OBJECT
FOR POLISHING FACET — 320

↓

POLISH FACET OF OBJECT IN
SELECTED ORIENTATION — 325

FIG. 6

FIG. 7A

FIG. 7B

FIG. 8A

FIG. 8B

FIG. 9

POSITION OBJECT AGAINST
POLISHING WHEEL OVER A
POLISHING ITERATION
505

SENSE POLISHING RELATED
PARAMETER(S)
510

515

IS
POLISHING ITERATION
OVER?

YES

INSPECT FACET AT IMAGING
STATION
520

NO

525

IS
ADJUSTING
NEEDED?

NO

YES

ADJUST ROBOTIC ARM
PRESSURE AGAINST POLISHING
WHEEL
530

ADJUST POLISHING TABLE
ROTATIONAL SPEED
535

ADJUST OBJECT POSITION ON
POLISHING TABLE
540

FIG. 10

PERFORM POLISH ITERATION ON FACET — 605

CLEAN OBJECT — 610

IMAGE FACET — 615

ADJUST POLISHING INSTRUCTION(S) — 617

ADJUST POLISHING PARAMETER(S) — 620

ADJUST 3D MODEL — 625

**FIG. 11**

**FIG. 12**

```
┌─────────────────────────────┐
│  CAPTURE 2D IMAGES OF FACETS │  705
│          ON OBJECT          │
└─────────────────────────────┘
              │
              ▼
┌─────────────────────────────┐
│      COMPUTE GRADING        │  710
│        PARAMETERS           │
└─────────────────────────────┘
              │
              ▼
┌─────────────────────────────┐
│   STORE GRADING ON COMPUTER │  715
│      READABLE MEDIUM        │
└─────────────────────────────┘
              │
              ▼
┌─────────────────────────────┐
│    DETERMINE GEOMETRY OF    │  720
│      FACETS OF OBJECT       │
└─────────────────────────────┘
              │
              ▼
┌─────────────────────────────┐
│   DETERMINE 3D POSITION OF  │  725
│      FACETS OF OBJECT       │
└─────────────────────────────┘
              │
              ▼
┌─────────────────────────────┐
│   DETERMINE MORPHOLOGY OF   │  730
│          FACETS             │
└─────────────────────────────┘
              │
              ▼
┌─────────────────────────────┐
│    GENERATE SIGNATURE KEY   │  735
└─────────────────────────────┘
              │
              ▼
┌─────────────────────────────┐
│    STORE SIGNATURE KEY ON   │  740
│  COMPUTER READABLE MEDIUM   │
└─────────────────────────────┘
```

FIG. 13

FIG. 14A

FIG. 14B

```
                                                                              805
        ┌──────────────────────────────────────────────────┐
        │            MOUNT OBJECT ON ROBOTIC ARM            │
        └──────────────────────────────────────────────────┘
                                │
                                ▼                             810
        ┌──────────────────────────────────────────────────┐
        │          STATION OBJECT AT IMAGING STATION        │
        └──────────────────────────────────────────────────┘
                                │
                                ▼                             815
        ┌──────────────────────────────────────────────────┐
        │       DEFINE 3D MODEL OF OBJECT AND REGISTER WITH │
        │                    TARGET MODEL                   │
        └──────────────────────────────────────────────────┘
                                │
                                ▼                             820
        ┌──────────────────────────────────────────────────┐
   ┌───▶│      ITERATE BETWEEN STATIONING AT LASER CUTTING  │
   │    │            STATION AND IMAGING STATION            │
   │    └──────────────────────────────────────────────────┘
   │                            │
   │                            ▼                             825
   │         ◇ ── ── ── ── ── ── ── ── ── ── ── ── ◇
   │  NO           IS
   └── ◇     LASER CUTTING COMPLETE                ◇
             ?
           ◇ ── ── ── ── ── ── ── ── ── ── ── ── ◇
                                │ YES
                                ▼                             830
        ┌──────────────────────────────────────────────────┐
   ┌───▶│    ITERATE BETWEEN STATIONING AT POLISHING STATION│
   │    │               AND IMAGING STATION                 │
   │    └──────────────────────────────────────────────────┘
   │                            │ YES
   │                            ▼                             835
   │         ◇ ── ── ── ── ── ── ── ── ── ── ── ── ◇
   │  NO           IS
   └── ◇      POLISHING COMPLETE                   ◇
             ?
           ◇ ── ── ── ── ── ── ── ── ── ── ── ── ◇
                                │
                                ▼                             840
        ┌──────────────────────────────────────────────────┐
        │          RELEASE OBJECT FROM ROBOTIC ARM          │
        └──────────────────────────────────────────────────┘
```

FIG. 15

FIG. 16

MARK PRESSPOT WITH AN ID CODE FOR IDENTIFYING OBJECT — 905

MOUNT OBJECT IN PRESSPOT ON ROBOTIC ARM — 910

READ ID CODE — 915

ACCESS INSTRUCTIONS FOR FACETING OBJECT BASED ON ID CODE — 920

FIG. 17

**EP 4 114 614 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019042850 A1
- WO 2019042850 A
- WO 2019043488 A
- US 2014235141 A1
- US 2014067331 A1